(19) Europäisches Patentamt
European Patent Office
Office européen des brevets

(11) Veröffentlichungsnummer: **0 276 479**
**A1**

(12) **EUROPÄISCHE PATENTANMELDUNG**

(21) Anmeldenummer: 87119258.9

(22) Anmeldetag: 28.12.87

(51) Int. Cl.⁴: **C05F 11/00 , C05F 3/00**

(30) Priorität: 30.12.86 DE 3644671

(43) Veröffentlichungstag der Anmeldung:
03.08.88 Patentblatt 88/31

(84) Benannte Vertragsstaaten:
ES GR

(71) Anmelder: **Grabbe, Klaus, Dr.**
**Tiergarten 24**
**D-3300 Braunschweig(DE)**

Anmelder: **Nille, Bernd, Dr.**
**Salzdahlumer Strasse 128 d**
**D-3340 Wolfenbüttel(DE)**

(72) Erfinder: **Grabbe, Klaus, Dr.**
**Tiergarten 24**
**D-3300 Braunschweig(DE)**
Erfinder: **Nille, Bernd, Dr.**
**Salzdahlumer Strasse 128 d**
**D-3340 Wolfenbüttel(DE)**

(74) Vertreter: **von Samson-Himmelstjerna,**
**Friedrich R. Dipl.-Phys. et al**
**Samson & Bülow Widenmayerstrasse 5/I**
**D-8000 München 22(DE)**

(54) Düngemittel mit einem Gehalt an Pilzmyzel sowie Verfahren zur Herstellung des Düngemittels.

(57) Ein Düngemittels auf der Basis von kompostierten Reststoffen der Tierhaltung und/oder Pflanzenproduktion ist durch die Zumischung von abgetötetem Pilzmyzel aus der industriellen Metabolitproduktion gekennzeichnet. Mit diesem Düngemittel lassen sich bei vertretbarem Mengen-und Kostenaufwand hohe Erträge erzielen, obwohl die Nitrataufnahme in die Pflanze äußerst gering bleibt sowie Auswaschungen des Nitrats im Boden drastisch reduziert werden. Außerdem ist dieses Düngemittel einfach zu handhaben.

EP 0 276 479 A1

## Düngemittel mit einem Gehalt an Pilzmyzel sowie Verfahren zur Herstellung des Düngemittels

### Technisches Gebiet:

Die Erfindung betrifft ein Düngemittel auf der Basis eines Kompostes aus Reststoffen der Tierhaltung und/oder Pflanzenproduktion.

### Stand der Technik:

Bekanntlich entstehen Komposte durch die mikrobielle Verrottung organischer Reststoffe biogenen Ursprungs. Sie werden wegen ihres Gehaltes an Humus-, Nähr-und Wirkstoffen als Bodenverbesserungsmittel seit altersher geschätzt. Ihr Düngewert muß dagegen differenziert betrachtet werden. Während sich Phosphat-und Kalisalze anreichern, tritt bei der konventionellen Kompostbereitung infolge des Wechsels zwischen Aerobie und Anaerobie durch die Nitrifikation und Denitrifikation eine Stickstoffminimierung ein, die in Abhängigkeit vom Grad der Vererdung zu einer fortschreitenden Stickstoffverarmung führt.

Der nach Gärtnerart hergestellte Kompost hat den Nachteil, daß der Gehalt an Nährstoffen, deren Zusammensetzung und Pflanzenverfügbarkeit nur schwer eingeschätzt werden können. Die zudem geringe Konzentration erfordert die Ausbringung großer Mengen, wenn ein Düngungseffekt erzielt werden soll, der mit Mineraldüngergaben verglichen werden kann. Ertragsvergleiche mit unterschiedlich zu bewertenden N-Quellen erfordern ein identisches Gesamt-N-Niveau, wenn man die ausreichende Versorgung mit allen anderen Pflanzennährstoffen als gegeben annimmt. Es gilt die Regel, daß hohe Erträge nicht nur ein entsprechendes Stickstoffangebot vorausetzen, sondern auch mit einer hohen Nitratanreicherung im pflanzlichen Gewebe verknüpft sind. Als klassisches Beispiel für diese Abhängigkeiten gilt der Spinat.

Der Kompostierungsprozeß kann zu einer Nährstoffkonservierung führen, wenn er unter definierten Bedingungen abläuft. Als Beispiel sei die Substratherstellung im Champignonanbau genannt. Nach Abschluß der Pilzernte bildet das sogenannte "abgetragene Pilzkultursubstrat" einen Reststoff, der als Ausgangsmaterial für eine Kompostherstellung mit dem Ziel einer gartenbaulichen Verwendung dienen kann. Es lassen sich nicht nur Bodenverbesserungsmittel für diverse Einsatzgebiete durch Einmischung von Torf und Rinde (DE-PS 30 24 737) herstellen, sondern auch Düngemittel. Hierfür wurde in der DE-PS 28 31 583 vorgeschlagen, abgetragene Kultursubstrate, insbesondere Pilzkultursubstrate, mit einem an sich ebenfalls vorbekannten mineraldüngerhaltigen Produkt zu versetzen. Hierdurch läßt sich die günstige Wechselwirkung zwischen Humus und mineralischen Nährstoffen durch vorherige innige Vermischung gezielt optimieren. Dabei kann das Mischungsverhältnis den jeweiligen Wünschen so angepaßt werden, daß ein ausbalancierter Humusvolldünger mit Depot-und Langzeitwirkung erhalten wird.

Ein ganz erheblicher Nachteil dieses Düngemittels besteht darin, daß abgetragene Kultursubstrate eine hohe Feuchtigkeit von etwa 80% haben, woran sich auch durch die Zugabe von Mineraldünger nur unwesentlich etwas ändert. Das Düngemittel nach der DE-PS 28 31 583 stellt deshalb eine relativ - schmierige Masse dar, wenn es nicht - wie in dieser Druckschrift gefordert-einer Trocknung auf einen Feuchtigkeitsgehalt unter 50%, vorzugsweise auf 40% unterzogen wird. Dies kann durch Lagerung unter Dach oder auch durch Zwangstrocknung mit entsprechenden Geräten geschehen. Es bedeutet jedoch einen nicht unerheblichen Zeit-und Kostenaufwand für die Nachbehandlung des Düngemittels. Ein weiterer Nachteil besteht darin, daß zwar durchaus gute Erträge erzielbar sind, diese Erträge jedoch mit hohen Nitratgehalten in der Pflanze erkauft werden müssen. Außerdem kommt es - wie bei der reinen Mineraldüngung - zu Auswaschungen des Nitrats in das Grundwasser mit den entsprechenden Folgen für die Trinkwasserqualität.

Daneben sind seit einigen Jahren Düngemittel bekannt, die hauptsächlich aus dem Pilzmyzel aus der Penicillin-Produktion bestehen. Dieses Pilzmyzel entsteht durch Flüssigfermentation in einer Nährlösung aus Zucker, Stickstoffquelle und Wasser sowie einigen weiteren Zusätzen. Nach der Fermentation wird das Pilzmyzel durch Filtrierung abgetrennt. Anschließend wird das gelöste Penicillin aus dem organischen Lösungsmittel extrahiert.

Für die Verwendung als Düngemittel wird das so gewonnene Pilzmyzel abgetötet, hitzesterillisiert und granuliert. Es hat dann einen geringen Wassergehalt und einen bei 80% liegenden Anteil organischer Substanz, die zusätzlich Stickstoff, Phosphor, Kalium, Magnesium und Calzium sowie eine Reihe von Spurenelementen enthält. Wegen des hohen Anteils organischer Substanz eignet sich dieses Düngemittel insbesondere für leichte, nährstoffarme Böden. Aufgrund seines hohen Preises wird es vorwiegend zur Begrünung von Problemstandorten, wie beispielsweise Skipisten, Böschungen oder dergleichen verwendet (vgl. EP-OS 0 121 493), wo mit üblichen Düngemitteln keine oder ungenügende Erfolge erzielbar sind.

## Darstellung der Erfindung:

Der Erfindung liegt die Aufgabe zugrunde, ein Düngemittel sowie ein Verfahren zu dessen Herstellung zu finden, mit dem sich bei vertretbarem Mengen-und Kostenaufwand hohe Erträge erzielen lassen, bei dem jedoch die Nitrataufnahme in die Pflanze äußerst gering bleibt sowie Auswaschungen des Nitrats im Boden drastisch reduziert werden. Ein weiteres Ziel ist eine möglichst einfache Handhabbarkeit.

Diese Aufgabe wird erfindungsgemäß durch die Kombination eines Kompostes aus Reststoffen der tierischen und/oder pflanzlichen Produktion mit abgetötetem Pilzmyzel aus der industriellen Metabolitproduktion, insbesondere mit dem Myzel Antibiotika produzierender Pilze, vorzugsweise in hitzesterilisierter Form, gelöst.

Die erfindungsgemäße Kombination zeichnet sich durch eine Reihe von Vorteilen aus, die es zu einem ökologisch besonders wertvollen Düngemittel machen. Zum einen werden sehr gute Erträge erzielt, die auf einem Niveau liegen, das auch bei Verwendung des Pilzmyzels allein erreichbar ist. Dabei werden diese Erträge schon dann erzielt, wenn der Anteil des Kompostes aus Kostengründen sehr hoch gewählt wird. Zum anderen bleibt der Gehalt des von der Pflanze aufgenommenen Nitrats extrem niedrig, und zwar etwa auf dem Niveau, das such bei Verwendung des Kompostes allein einstellt. Der nitratreduzierende Einfluß des Kompostes bleibt also durch die Kombination mit dem Pilzmyzel praktisch vollständig erhalten, ohne daß hierdurch die Erträge, die mit dem Pilzmyzel allein erreicht werden, geschmälert werden. Angesichts der herrschenden Meinung, daß gute und erst rechte höchste Erträge mit einer hohen Nitranreicherung in der Pflanze verknüpft sind, ist dies ein unerwartetes Ergebnis. Zu erwarten gewesen wäre ein gegenüber der alleinigen Verwendung des Pilzmyzels deutlich verminderter Ertrag bei gleichzeitig erhöhter Nitrataufnahme durch die Pflanze. Da die vorbeschriebenen Wirkungen der Erfindung schon bei relativ geringen Beimischungen des Pilzmyzels entstehen, ist damit ein kostengünstiges Düngemittel gefunden, mit dem man bei vertretbarem Kosten-und Mengenaufwand ökologisch wertvolles Erntegut bei gleichzeitig hohen Erträgen erhält.

Der ökologische Wert des erfindungsgemäßen Düngemittels wird noch dadurch gesteigert, daß der von dem Düngemittel in den Boden eingebrachte Stickstoff biologisch festgelegt ist und nur verzögert freigesetzt wird, so daß er vor Auswaschungen geschützt bleibt und nicht in das Grundwasser gelangen kann. Es bildet sich vielmehr eine langsam fließende Stickstoffquelle, die für hohe Erträge sorgt, wobei allerdings nicht die bisher bei solchen Erträgen als zwangsläufig hingenommene Nitratanreicherung und gleichzeitig die Gefahr von Auswaschungen in das Grundwasser in Kauf genommen werden müssen.

Ein weiterer Vorteil besteht darin, daß das Pilzmyzel den hohen Anteil an Flüssigkeit, der gerade fur Komposte aus Kultursubstraten charakteristisch ist, bindet, so daß ein relativ trockenes und damit problemlos handhabbares Düngemittel entsteht. Eine kosten-und zeitaufwendige Zwangstrocknung kann entfallen. Nichtsdestoweniger ist der höhe Feuchtegehalt des Kompostes von Nutzen, denn er sorgt für eine gute Auflösung des Pilzmyzels in der Mischung und damit für deren Integration.

In Ausbildung der Erfindung ist vorgesehen, daß die Reststoffe, aus denen der Kompost hergestellt worden ist, abgtragene Kultursubstrate aus der Speisepilzproduktion sind. Bei deren Herstellung werden in der Regel Gemische auf der Basis organischer Reststoffe verwendet. Vorzugsweise werden Gemische aus Stroh, Stallmist, insbesondere Pferdemist, verwendet. Diese Gemische durchlaufen einen Heißrotte-Kompostierungsprozeß, der ein weitgehend schädlings-und unkrautfreies Material liefert. Das Substrat wird dann für die Kultivierung bzw. den Anbau von Speisepilzen verwendet. Durch das Wachstum der Pilze werden die verwendeten Substrate bzw. Komposte nur zum Teil ihrer Nährstoffe beraubt. Das abgetragene Pilzkultursubstrat ist gegenüber dem Ausgangsmaterial sogar mit Nährstoffen angereichert.

Die Auswahl der jeweils verwendeten abgetragenen Pilzkultursubstrate wird einerseits unter Zugrundelegung wirtschaftlicher Gesichtspunkte getroffen, beispielsweise danach, welches Kultursubstrat in der Nähe des jeweiligen Herstellungsortes erhältlich ist. Andererseits können die jeweils verwendeten Kultursubstrate auch unter dem Gesichtspunkt ihrer Weiterverarbeitung und des jeweiligen Verwendungszweckes ausgewählt werden. Die Kultursubstrate werden kompostiert, wie dies in der DE-PS 28 31 583 beschrieben ist. Aus den obengenannten Gründen kann jedoch die darin geforderte Trocknung entfallen.

Im Gemisch mit abgetragenen Pilzkultursubstraten können alternativ oder in Kombination damit auch Stallmiste, Stroh, Holz und/oder Rinden als Ausgangsmaterial für den Kompostierungsprozeß verwendet werden.

Ein weitere Optimierung des erfindungsgemäßen Düngemittels läßt sich dadurch erreichen, daß dem Düngemittel in maßvollem Umfang mineralische Nährstoffe, insbesondere Stickstoffdüngemittel, zugesetzt werden. Hierfür kommt insbesondere Ammoniumdünger, wie beispielsweise Ammoniumsulfat, in Frage, aber auch Diammonphosphat und andere mineralische Düngemittel. Bei mäßigem Zusatz lassen sich hierdurch noch wesentlich höhere Erträge als mit dem Pilzmyzel allein erzielen, wobei jedoch das in der Pflanze nachweisbare Nitrat immer noch vergleichsweise niedrig bleibt, und zwar erheblich niedriger als bei der Kombination Kompost und Mineraldünger allein. Die Zugabemengen können den jeweiligen Erfordernissen angepaßt werden. Es lassen sich damit Höchsterträge erzielen, dann jedoch unter Inkaufnahme steigender Nitratgehalte in der Pflanze. Durch Versuche wurde festgestellt, daß bei sorgfältiger Formulierung Erträge erzielbar sind, die fast an die Höchsterträge heranreichen, bei denen die Pflanze aber noch relativ geringe Nitratmengen enthält. Damit liegt ein Düngemittel vor, das mit geringen Aufwandmengen beste Erträge bei außerordentlich niedrigen Nitratwerten in der Pflanze liefert. Ein solches Düngemittel ist vor allem für die Düngung von Futter-und Nahrungspflanzen geeignet, denn bekanntlich wandelt sich Nitrat im Körper in cancerogen wirkende Folgeprodukte um.

Nach einem weiteren Merkmal der Erfindung ist vorgeschlagen, daß dem Düngemittel auch weitere nährstoffreiche organische Zuschlagstoffe zugesetzt sind, beispielsweise Horn, Blut-und Knochenmehle oder auch Gülle. Auch kann der Zusatz von Mikronährstoffen, beispielsweise Eisen, Kupfer, Magnesium, Mangan, Bor, Molybdän, oder Zink in Frage kommen.

Es kann ferner wünschenswert sein, dem erfindungsgemäßen Düngemittel strukturverbessernde Zuschlagstoffe zuzugeben. Als Speicher für Nähr-und Schadstoffe sowie für Wasser eignen sich dabei Tonminerale, Austauscherharze, Lava und Aktivkohle. Ist eine ph-Wert-Regulation gewünscht, empfiehlt sich der Zusatz von Kalk, Dünger oder Gips. Eine Verbesserung des Porenvolumens wird durch Perlite, Styrolpolymerysate und Blähton erreicht. Für die Verbesserung der Rieselfähigkeit eignet sich insbesondere Braunkohlestaub. Als Stützkorn dienen insbesondere Lava und Mineralgestein verschiedener Sieblinien.

Aufgrund der durchgeführten Versuche hat es sich als zweckmäßig erwiesen, das Düngemittel so zu formulieren, daß der Stickstoff-Gehalt im Bereich von 2% bis 6,5%, vorzugsweise von 2% bis 4% liegt.

Als besonders günstig hat sich ein Verfahren zur Herstellung des vorbeschriebenen Düngemittels erwiesen, bei dem erfindungsgemäß aus den Reststoffen prozeßkontrolliert ein Kompost hergestellt und mit dem abgetöteten Pilzmyzel aus der industriellen Metabolitproduktion vermischt wird. Unter prozeßkontrolliert ist eine verfahrensmäßige Behandlung des Kompostes dergestalt zu verstehen, daß die Kompostierung durch häufiges Bearbeiten, insbesondere Wenden und Lüften, unter definierten Bedingungen abläuft und dabei alle Teile des Kompostes erfaßt. Vorzugsweise soll die Kompostierung in einem Temperaturbereich von 30°C bis 60°C durchgeführt werden. Dabei kann es nützlich sein, zusätzlich Starterkulturen zuzugeben. Unter solchen Starterkulturen versteht man vorkultivierte Mikroorganismenpopulationen, die sofort das Stoffwechselgeschehen bestimmen.

## Wege zur Ausführung der Erfindung:

Die nachstehenden Tabellen geben die Erträge und die Nitratanreicherung in der Pflanze für verschiedene Beispiele der Erfindung und für Beispiele von vorbekannten Düngemitteln wieder. Es wurden Frühjahresvegetationsversuche mit der Spinat-$F_1$-Hybride "Melodie" in Mitscherlich-Gefäßen durchgeführt. Die nachstehend angegebenen Werte sind Mittelwerte aus Parallelansätzen. Folgende Düngemittel wurden miteinander verglichen, wobei der Gesamtstickstoffgehalt jeweils in Klammern angegeben ist:

Beispiel I: Champignonkompost (Kurzform für abgeerntetes und anschließend kompostiertes Champignonkultursubstrat, 1,5% N);

Beispiel II:Rindenhumus (Kurzform für unter Harnstoffzusatz heiß gerottetes Rindenmaterial der Sieblinie 0 bis 20 mm, 1% N);

Beispiel III:Pilzmyzel (Kurzbezeichnung für heiß sterilisiertes, abgetötetes Pilzmyzel aus der Penicillinproduktion; 6,5% N);

Beispiel IV:Kalkammonsalpeter (Mineraldünger der Formulierung 50% Ammonium-N und 50% Salpeter-N);

Beispiel V:100 kg Champignonkompost
3,5 kg Diammonphosphat (Mineraldünger der Formulierung 16% N und 46% $P_2O_5$)
(2 % N);

Beispiel VI:100 kg Champignonkompost
4 kg Diammonphosphat
12 kg Ammonsulfat (schwefelsaures Ammoniak mit 21% N)
(4 % N);

Beispiel VII:100 kg Champignonkompost
7,5 kg Pilzmyzel
(2% N);

Beispiel VIII:100 kg Champignonkompost
15 kg Pilzmyzel
3 kg Diammonphosphat
(2,5% N);

Beispiel IX:100 kg Champignonkompost
22,5 kg Pilzmyzel
4 kg Diammonphosphat
1 kg Ammonsulfat
(3% N)

Beispiel X:100 kg Champignonkompost
; 30 kg Pilzmyzel
5 kg Diammonphosphat
3 kg Ammonsulfat
(3,5% N)

Beispiel XI:100 kg Champignonkompost
37,5 kg Pilzmyzel
6 kg Diammonphosphat
5 kg Ammonsulfat
(4% N);

Beispiel XII:100 kg Champignonkompost
35 kg Pilzmyzel
15 kg Diammonphosphat
25 kg Ammonsulfat
(6,5% N).

Mit diesen Düngemittelformulierungen wurden die in den nachfolgenden Tabellen aufgeführten Erträge erzielt, angegeben in Gramm Frischmasse und prozentualem Trockenmasseanteil, wobei jeweils der zugehörige, in der Pflanze gemessene Nitrat-N-Gehalt - pro Kilogramm Frischmasse hochgerechnet - und die eingewogene Menge des jeweiligen Düngemittels pro Mitscherlich-Gefäß angegeben sind. Aus den Angaben des Nitrat-Stickstoffs ($NO_3$-N) läßt sich der Nitratgehalt durch Multiplikaton mit dem Faktor 4 errechnen.

Die Tabelle 1 gibt die Ergebnisse bei Ausbringen von 1 g N/Mitscherlich-Gefäß, entsprechend 70 kg N/ha an, während die Tabelle 2 die Ergebnisse beim Ausbringen von 2 g N/Mitscherlich-Gefäß, entsprechend 140 kg/ha ausweist.

## T a b e l l e   1

| Düngemittel-beispiel | Frischmasse g | Trockenmasse % | $NO_3$-N ppm | Menge g |
|---|---|---|---|---|
| I (Komposte) | 29 | 8,9 | 2,1 | 67 |
| II | 11 | 13 | 34 | 100 |
| III (Pilzmyzel) | 90 | 7,3 | 15 | 15 |
| IV (Minerald.) | 101 | 8,3 | 683 | 3,8 |
| V (Kompost+ | 97 | 6,6 | 11 | 50 |
| VI   Minerald.) | 114 | 7,2 | 305 | 25 |
| VII | 88 | 11 | 2,5 | 50 |
| VIII (Kompost+ | 112 | 9,0 | 3,8 | 40 |
| IX   Pilzmyzel+ | 98 | 7,1 | 9,8 | 33 |
| X   ggf. | 112 | 6,7 | 33 | 29 |
| XI   Minerald.) | 118 | 6,6 | 113 | 25 |
| XII | 106 | 7,6 | 490 | 15 |
| Kontrollboden | 10 | 14 | | |

## Tabelle 2

| Düngemittel-beispiel | Frischmasse g | Trockenmasse % | NO$_3$-N ppm | Menge g |
|---|---|---|---|---|
| I (Komposte) | 47 | 9,3 | 17 | 132 |
| II | 12 | 13 | 40 | 200 |
| III (Pilzmyzel) | 121 | 6,7 | 366 | 30 |
| IV Minerald.) | 101 | 7,6 | 929 | 7,6 |
| V (Kompost+ | 135 | 6,8 | 311 | 100 |
| VI Minerald.) | 122 | 6,4 | 625 | 50 |
| VII | 121 | 10 | 15 | 100 |
| VIII (Kompost+ | 110 | 8,1 | 31 | 80 |
| IX Pilzmyzel+ | 135 | 6,9 | 79 | 66 |
| X ggf. | 138 | 6,0 | 87 | 58 |
| XI Minerald.) | 143 | 6,3 | 700 | 50 |
| XII | 115 | 6,8 | 864 | 30 |
| Kontrollboden | 10 | 14 | | |

Beide Tabellen lassen zunächst erkennen, daß schon mit der erfindungsgemäßen Kombination ohne zusätzliche Mineraldüngerbeimengung (Beispiel VII) praktisch exakt die gleichen Erträge erzielt werden wie beim Düngen mit abgetötetem Pilzmyzel allein, obwohl der Anteil des Pilzmyzels im Beispiel VII sehr gering ist. Gleichzeitig bleibt die Nitrataufnahme in die Pflanze auf dem Niveau des im Beispiel VII verwendeten Kompostes gemäß Beispiel I. Die geringe Beimengung des Pilzmyzels bewirkt also einen gegenüber dem Kompost verdreifachten Ertrag, ohne daß sich an der Nitrataufnahme in der Pflanze etwas ändert. Damit ist erstmals eine ökologisch äußerst wertvolle und gleichzeitig ertragreiche Pflanzenproduktion möglich, was sich bisher ausschloß.

Die Beispiele VIII und IX verdeutlichen zudem, daß sich durch Erhöhung des Anteils des Pilzmyzels und vorsichtige Zugabe von Mineraldünger Höchsterträge bei immer noch sehr geringer Nitratanreicherung in der Pflanze erzielen lassen. Dies gilt auch für das Beispiel X in Tabelle 2. Bei deutlicher Erhöhung der Mineraldüngerzugabe entsprechend den Beispielen XI und XII wird kaum noch eine Ertragssteigerung, im Beispiel XII sogar eine Ertragsminderung erzielt, wobei dies noch gleichzeitig mit einer drastischen Erhöhung der Nitrataufnahme in der Pflanze erkauft wird. Derart formulierte Düngemittel entsprechen mehr und mehr dem Wirkungsmuster mineralischer und organisch-mineralischer Düngemittel, was die Wirkung auf das Pflanzenwachstum betrifft. Die Zusammensetzung, Nährstoffverfügbarkeit und Langzeitwirkung machen sie trotz allem zu einer ökologisch sinnvollen Alternative im Rahmen spezieller Verwendungszwecke, z.B bei Problembegrünungen und in der Forstwirtschaft.

**Ansprüche**

1. Düngemittel auf der Basis von kompostierten Reststoffen der Tierhaltung und/oder Pflanzenproduktion,
gekennzeichnet durch die Zumischung von abgetötetem Pilzmyzel aus der industriellen Metabolitproduktion.

2. Düngemittel nach Anspruch 1,
dadurch gekennzeichnet, daß das Pilzmyzel das Myzel Antibiotika produzierender Pilze ist.

3. Düngemittel nach Anspruch 1 oder 2,
dadurch gekennzeichnet, daß die Reststoffe abgetragene Kultursubstrate aus der Speisepilzproduktion sind.

4. Düngemittel nach einem der Ansprüche 1 bis 3,
dadurch gekennzeichnet, daß die Reststofe Stallmiste, Stroh, Holz und/oder Rinden sind.

5. Düngemittel nach einem der Ansprüche 1 bis 4,
dadurch gekennzeichnet, daß dem Düngemittel mineralische Nährstoffe, insbesondere Stickstoffdünger, zugesetzt sind.

6. Düngemittel nach einem der Ansprüche 1 bis 5,
dadurch gekennzeichnet, daß dem Düngemittel weitere organische Zuschlagstoffe zugesetzt sind.

7. Düngemittel nach einem der Ansprüche 1 bis 6,
dadurch gekennzeichnet, daß dem Düngemittel strukturverbessernde Zuschlagstoffe zugegeben sind.

8. Düngemittel nach einem der Ansprüche 1 bis 7,
dadurch gekennzeichnet, daß das Düngemittel derart formuliert ist, daß sein Stickstoffgehalt bei 2% bis 4% liegt.

9. Verfahren zur Herstellung des Düngemittels nach einem der Ansprüche 1 bis 8, wobei die Reststoffe prozeßkontrolliert kompostiert werden,
dadurch gekennzeichnet, daß man den kompostierten Reststoffen ein abgetötetes Pilzmyzel aus der industriellen Metabolitproduktion zumischt.

10. Verfahren nach Anspruch 9,
dadurch gekennzeichnet, daß man die Kompostierung im Temperaturbereich von 30°C bis 60°C durchführt.

11. Verfahren nach Anspruch 9 oder 10,
dadurch gekennzeichnet, daß man den Reststoffen vor der Kompostierung Starterkulturen zusetzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-B-3 024 737 (K. GRABBE) <br> * Ansprüche; Spalte 3, Zeilen 29-50; Spalte 4, Zeilen 45-49 * <br> --- | 1-7,9-11 | C 05 F 11/00 <br> C 05 F 3/00 |
| Y | EP-A-0 060 407 (HOECHST AG) <br> * Ansprüche * <br> --- | 1 | |
| D,Y | DE-B-2 831 583 (K. GRABBE) <br> * Ansprüche; Spalte 3, Zeilen 55-58; Spalte 6, Zeilen 24,25 * <br> --- | 1-7,9 | |
| Y | DD-A- 139 083 (B. OLESCH) <br> * Seite 2, Zeilen 2-6; Zusammenfassung * <br> --- | 1 | |
| A | EP-A-0 121 493 (BIOCHEMIE GmbH) <br> * Seite 2, Zeilen 16-23; Seite 3, Zeilen 18-30 * <br> --- | 1 | |
| Y | BE-A- 505 453 (W.G.A. CHRISTENSEN) <br> * Seite 3, Zeilen 22-52 * <br> --- | 10 | RECHERCHIERTE SACHGEBIETE (Int. Cl.4) |
| Y | US-A-2 337 686 (A.E. SHERMAN) <br> * Ansprüche * <br> --- | 10,11 | C 05 F <br> C 12 N |
| A | CHEMICAL ABSTRACTS, Band 72, Nr. 13, 30. März 1970, Seite 300, Zusammenfassung Nr. 65996k, Columbus, Ohio, US; V.S. BAWASKAR: "Chemical composition of dungs and some organic waste materials" <br> * Zusammenfassung * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 03-05-1988 | SCHUT,R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................
& : Mitglied der gleichen Patentfamilie, übereinstimmendes Dokument